# EUROPEAN PATENT APPLICATION

(11) **EP 1 976 084 A2**
(43) Date of publication of application: **01.10.2008**
(21) Application number: 08152864.8
(22) Date of filing: 18.03.2008
(51) Int. Cl.: H02B 11/127

(54) **Integrated system for first- and second-row air-break switches-disconnectors, with simplified maintenance, for railroad, tramway, light-rail, and subway power supplies**

(30) Priority: 28.03.2007 IT MI20070623
(71) Applicant: Mont-Ele S.r.l., 20034 Giussano MI (IT)
(72) Inventor: Vigano, Emanuele, 20036, MEDA MI (IT)
(74) Representative: Modiano, Micaela Nadia

(57) **Abstract**

An integrated system (1) for first- and second-row air-break switches-disconnectors, with simplified maintenance, comprising at least one containment cabinet (2) for a first-row on-load air-break switch-disconnector (8) and at least one containment cabinet (3) for a second-row on-load air-break switch-disconnector (8), which are connected to each other by means of a bar (4), each cabinet (2, 3) being constituted by a housing cabinet (5) and by a carriage (6) which can be extracted from said housing cabinet (5) and is adapted to support an on-load air-break switch-disconnector (8), segregated by busbars by means of at least one automatic shutter (10).

## Description

The present invention relates to an integrated system for first- and second-row air-break switches-disconnectors, with simplified maintenance, for railroad, tramway, light-rail, and subway power supplies.

As is known, the solutions currently used for on-load disconnection of DC lines leading out from electrical or DC distribution substations use horn-type disconnectors, which are installed on poles or in grid or masonry assemblies. In these solutions, the disconnectors are installed at prohibitive heights which make maintenance complicated, requiring platforms or aerial ladders. Moreover, in these known solutions it is necessary to place generally out of service the overhead line connected to the disconnector (with the consequent need to perform this activity at night and while stopping the rail operation of the leg) in order to perform maintenance thereof. Finally, in these solutions it is necessary to provide connection between the first- and second-row horn disconnectors with a copper cord or with a cable directly on site.

The aim of the present invention is to provide an integrated system for first- and second-row air-break switches-disconnectors which allows simplified maintenance.

Within this aim, an object of the present invention is to provide an integrated system for first- and second-row air-break switches-disconnectors in which it is not necessary to resort to platforms and aerial ladders to access the disconnectors.

Another object of the present invention is to provide an integrated system for first- and second-row air-break switches-disconnectors in which the operations for maintenance and optional replacement of components do not require placing the contact line offline.

Another object of the present invention is to provide an integrated system for first- and second-row air-break switches-disconnectors in which the downtimes for maintenance are reduced to the minimum possible and the entire carriage constituted by an air-break switch-disconnector can be replaced with another similar one in case of malfunction.

Still another object of the present invention is to provide an integrated system for first- and second-row air-break switches-disconnectors which is highly reliable, relatively simple to provide and at competitive costs.

This aim and these and other objects, which will become better apparent hereinafter, are achieved by an integrated system for first- and second-row air-break switches-disconnectors, with simplified maintenance, comprising at least one containment cabinet for a first-row on-load air-break switch-disconnector and at least one containment cabinet for a second-row on-load air-break switch-disconnector, which are connected to each other by means of a bar, each cabinet being constituted by a housing cabinet and by a carriage which can be extracted from said housing cabinet and is adapted to support an on-load air-break switch-disconnector, segregated by busbars by means of at least one automatic shutter.

Further characteristics and advantages will become better apparent from the description of a preferred but not exclusive embodiment of the integrated system according to the invention, illustrated by way of nonlimiting example in the accompanying drawings, wherein:

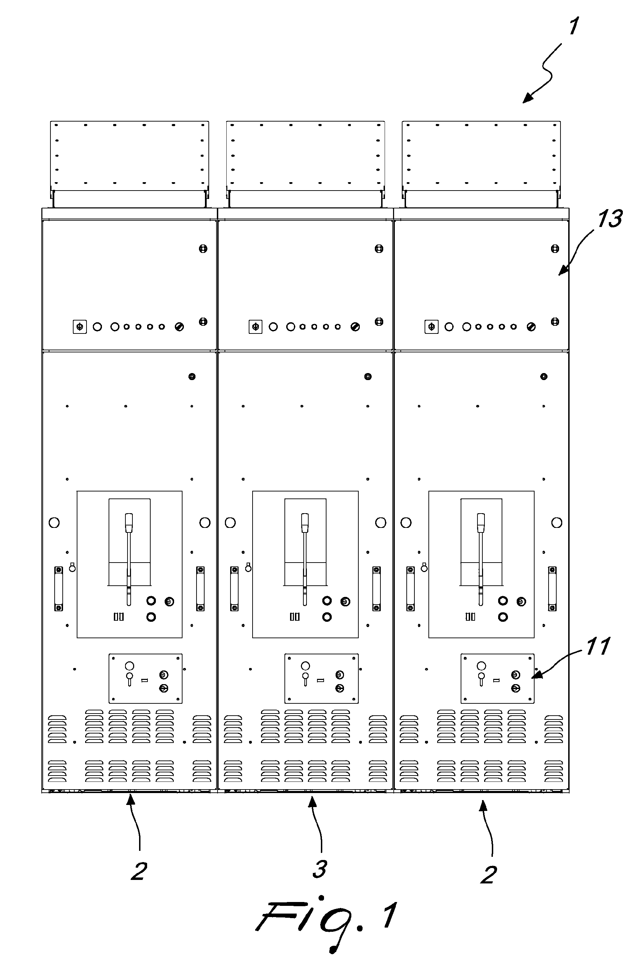

Figure 1 is a schematic front view of the integrated system according to the present invention;

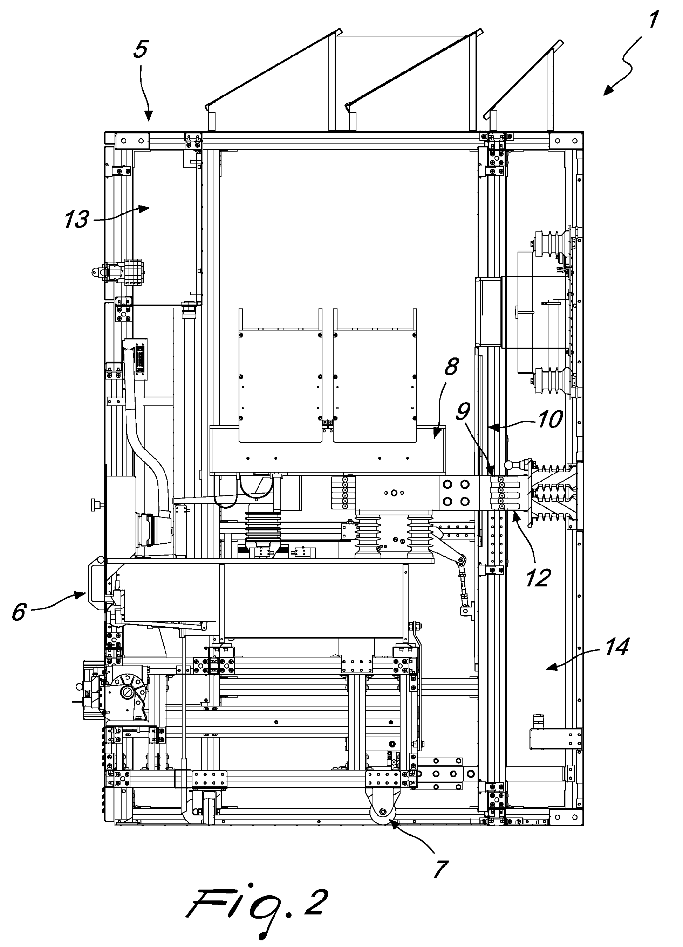

Figure 2 is a side cutout view of the integrated system according to the present invention;

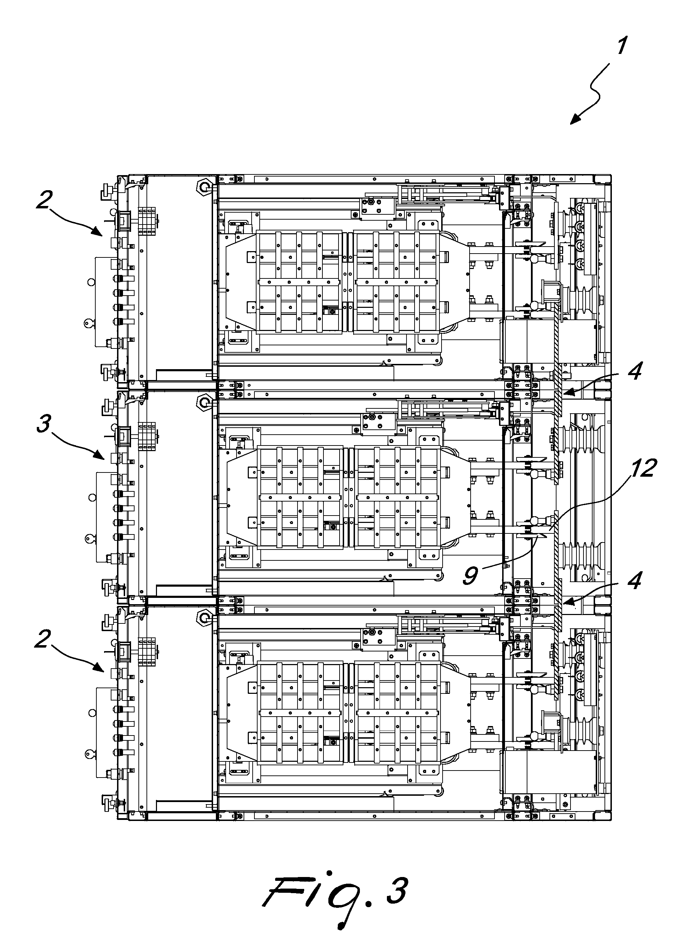

Figure 3 is a top plan view of the integrated system according to the present invention.

With reference to the figures, the integrated system according to the invention, generally designated by the reference numeral 1, comprises at least one and preferably two first-row disconnection cabinets 2, and at least one second-row disconnection cabinet 3. Such cabinets constitute the integrated system 1 and are interconnected by a bar 4.

The disconnection cabinets 2, 3 are each constituted by a housing cabinet 5, which is adapted to contain a carriage 6 which can be extracted from the cabinet 5, for example manually by means of a mechanical actuation system. The carriage 6 is provided with wheels 7 which allow its translational motion within the cabinet 5.

The extractable carriage 6 also supports, in addition to an on-load air-break switch-disconnector 8, power bars with the pins and clamps 9 which allow the engagement on the bars of the fixed portion of the cabinet 5.

Extraction of the carriage 6 from the cabinet 5 disconnects and secures all the power parts of the extractable carriage. At least one shutter 10 which prevents contact with the live bars of the cabinet is closed automatically.

With the auxiliary device connector inserted, it is possible to perform functional tests and once the connector has been disconnected it is possible to remove the carriage 6 from the cabinet 5.

Suitable electrical and/or mechanical locking systems (not shown) prevent the execution of incorrect maneuvers and in particular:
- extraction of the carriage while the on-load air-break switch-disconnector is closed;
- insertion of the carriage while the on-load air-break switch-disconnector is closed.

Moreover, extraction of the carriage 6 allows to perform not only easy maintenance with extremely simplified access to the different components but also optionally a complete replacement of the carriage 6 with a new carriage when troubleshooting and maintenance operations turn out to be too long.

In this manner, the maintenance operation can be performed in the time required, without having downtime problems for an entire electrical panel with which the carriage is associated.

The extractable carriage 6 is further provided with a handle 11 for actuating the operations for translational motion with a reduction unit and insertion/extraction levers, a key-operated locking system of the mechanical and electrical type, and a guide for centering during insertion.

During insertion of the extractable carriage 6, by means of suitable abutments, the levers of the mechanism that actuates the shutter 10 are actuated; once the shutter is raised, the passages which allow the power clamps 9 to engage corresponding fixed connections 12 rigidly coupled to the bars are free.

During extraction of the carriage 6, the shutters 10 block the passages of the clamps 9 by gravity, so as to ensure access to the fixed part in safe conditions and without accessibility of the active parts.

A compartment for auxiliary devices, terminal strips and connectors, designated by the reference numeral 13, is provided in the upper front part of the cabinet 5 and is provided with its own hatch for accessing such components.

A rear unit 14 of the cabinet constitutes a variable part which can be adapted to the individual system, so as to allow the entry of power cables from above or from below. The rear unit 14 can be the subject of different versions and in particular:
- a version for a first-row disconnector;
- a version for a second-row disconnector;
- a version with or without an RV device;
- a version with or without overvoltage discharge systems.

In practice it has been found that the integrated system according to the invention therefore allows to cluster a number of cabinets which contain the respective carriages, with a bar 4 which interconnects them.

Each cabinet is provided with an extractable carriage in order to facilitate accordingly the accessibility of the components.

The integrated system thus conceived is susceptible of numerous modifications and variations, all of which are within the scope of the appended claims; all the details may further be replaced with technically equivalent elements.

In practice, the materials used, so long as they are compatible with the specific use, as well as the contingent shapes and dimensions, may be any according to requirements and to the state of the art.

The disclosures in Italian Patent Application No. MI2007A000623 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An integrated system for first- and second-row air-break switches-disconnectors, with simplified maintenance, comprising at least one containment cabinet for a first-row on-load air-break switch-disconnector and at least one containment cabinet for a second-row on-load air-break switch-disconnector, which are connected to each other by means of a bar, each cabinet being constituted by a housing cabinet and by a carriage which can be extracted from said housing cabinet and is adapted to support an on-load air-break switch-disconnector, segregated by busbars by means of at least one automatic shutter.

2. The integrated system for first- and second-row disconnectors according to claim 1, **characterized in that** the at least one first-row cabinet and the at least one second-row cabinet are clustered and interconnected on a bar.

3. The integrated system for first- and second-row disconnectors according to claim 1, **characterized in that** the extractable carriage of each cabinet is provided with clamps for electrical connection to bars of the fixed part of the cabinet.

4. The integrated system for first- and second-row disconnectors according to claim 1, **characterized in that** the extractable carriage is provided with wheels for its extraction from, or insertion in, said cabinet.

5. The integrated system according to one or more of the preceding claims, **characterized in that** in each cabinet said at least one shutter is adapted, when the carriage is extracted, to block the passages for said clamps, in order to separate the live bars from the remaining portions of said cabinet.

6. The integrated system according to one or more of the preceding claims, **characterized in that** said shutter is of the metallic type or made of insulating material and is integrated in the hatch for accessing the bar and line output compartment.

7. The integrated system according to one or more of the preceding claims, **characterized in that** said cabinet comprises a compartment for accommodating auxiliary devices, terminal strips and/or connectors for the collection of logic and control cables.
